# EUROPÄISCHE PATENTANMELDUNG

(11) **EP 1 253 702 A1**
(43) Veröffentlichungstag der Anmeldung: **30.10.2002**
(21) Anmeldenummer: 01110309.0
(22) Anmeldetag: 26.04.2001
(51) Int. Cl.: H02K 51/00, B60K 6/04

(54) **Hybrider Fahrzeugantrieb**

(71) Anmelder: Ford Global Technologies, Inc., A subsidiary of Ford Motor Company, Dearborn, Michigan 48126 (US)
(72) Erfinder: Tropp, Axel Erwin, 53639 Koenigswinter (DE)
(74) Vertreter: Drömer, Hans-Carsten, Dipl.-Ing.

(57) **Zusammenfassung**

Die Erfindung betrifft einen hybriden Fahrzeugantrieb mit einer Brennkraftmaschine (1) und einem doppelten elektrischen Antrieb (4). Dabei wird ein erster Elektromotor/Generator durch einen ersten Anker (6), der auf der Ausgangswelle (8) der Brennkraftmaschine (1) angeordnet ist, und einen zweiten Anker (5), der mit der Abtriebswelle (7) verbunden ist, gebildet. Wenn an die Wicklungen des ersten Ankers (6) ein magnetisches Drehfeld angelegt wird, kann relativ zum zweiten Anker (5) (Permanentmagnet) ein gewünschter Drehzahlunterschied erzeugt werden. Die dabei erzeugte oder zugeführte elektrische Leistung wird von einem zweiten Elektromotor/Generator abgenommen beziehungsweise bereitgestellt, welcher durch einen dritten Anker (3) (Permanentmagnet) sowie einen drehfesten Stator (2) gebildet wird, welcher mit einem Drehfeld versorgt wird. Ferner kann elektrische Leistung auch mit einem Akkusatz (12) ausgetauscht werden. Der Fahrzeugantrieb hat den Vorteil, dass die Brennkraftmaschine (1) stets in ihrem optimalen Leistungsbereich betrieben werden kann.

## Beschreibung

Die Erfindung betrifft einen hybriden Fahrzeugantrieb, bei welchem eine Brennkraftmaschine und ein Elektromotor zur Erzeugung der Antriebsleistung miteinander verbunden sind. Ferner betrifft sie ein Verfahren zum Betreiben eines derartigen hybriden Fahrzeugantriebs.

Der zunehmende Einsatz von hybriden Fahrzeugantrieben beruht auf dem Bestreben, alternative Energiequellen für Fahrzeuge nutzbar zu machen. In der Regel wird dabei eine Kombination von einem Elektroantrieb mit Batteriesatz und einer konventionellen Brennkraftmaschine gewählt. Die Brennkraftmaschine macht das Fahrzeug prinzipiell unabhängig von einer externen Stromzufuhr zur Batterieladung und erhöht die Reichweite des Fahrzeugs auf ein normales Niveau von typischerweise 750 - 1500 km je nach Tankgröße.

Bei den genannten hybriden Antrieben können im Allgemeinen zwei Prinzipien unterschieden werden: Beim seriellen Typ erfolgt der Fahrzeugantrieb immer elektrisch. Die elektrische Energie hierfür wird dabei wahlweise aus einem Akkusatz oder einem von einer Brennkraftmaschine angetriebenen Generator entnommen. Der größte Nachteil dieser Bauform besteht darin, dass der elektrische Antriebsmotor auf die maximale Antriebsleistung hin ausgelegt werden muss, was insbesondere zu einem hohen Gewicht führt. Bei einem parallelen hybriden Fahrzeugantrieb arbeiten die Brennkraftmaschine und der Elektromotor gemeinsam oder wahlweise einzeln an einer gemeinsamen Welle. Ein Nachteil dieses Typs besteht darin, dass weiterhin ein konventionelles Getriebe notwendig ist, um Drehzahl und Drehmoment des Verbrennungsmotors an die jeweiligen Fahranforderungen anzupassen.

Des weiteren ist unter der Typenbezeichnung "Toyota Prius" ein Kraftfahrzeug mit einem Hybridantrieb bekannt, bei welchem ein Ottomotor an den Planetenträger, ein elektrischer Generator an das Sonnenrad und ein Elektromotor an das Hohlrad eines Planetengetriebes gekoppelt sind. Das Hohlrad bildet dabei gleichzeitig die Abtriebswelle des Fahrzeugantriebs. Die mechanische Kopplung von Brennkraftmaschine, Generator und Elektromotor über ein Planetengetriebe ermöglicht es, dass die Brennkraftmaschine möglichst konstant in einem optimalen Leistungsbereich betrieben wird, wobei gegebenenfalls anfallende überschüssige Leistung vom Generator in elektrische Energie umgewandelt und dem Elektromotor zugeführt wird. Zur Erzeugung maximaler Leistung kann der Elektromotor Energie aus einer Batterie entnehmen und gemeinsam mit dem Verbrennungsmotor auf die Antriebswelle wirken. Aufgrund des erforderlichen Planetengetriebes ist die Konstruktion eines derartigen Hybridantriebs jedoch verhältnismäßig aufwendig und einem starken mechanischen Verschleiß unterworfen.

Vor diesem Hintergrund bestand eine Aufgabe der vorliegenden Erfindung darin, einen hybriden Fahrzeugantrieb bereit zu stellen, mit welchem in möglichst einfacher und mechanisch verschleißarmer Bauweise ein Antrieb über eine Brennkraftmaschine und einen Elektromotor kombiniert werden kann.

Diese Aufgabe wird durch einen hybriden Fahrzeugantrieb mit den Merkmalen des Anspruchs 1 sowie ein Verfahren zum Betrieb eines derartigen Fahrzeugantriebes nach Anspruch 9 gelöst.

Vorteilhafte Ausgestaltungen sind in den Unteransprüchen enthalten.

Der hybride Fahrzeugantrieb enthält die folgenden Elemente:
- eine Brennkraftmaschine mit einer von dieser angetriebenen Ausgangswelle;
- einen ersten Anker, welcher auf der vorstehend genannten Ausgangswelle der Brennkraftmaschine angeordnet ist; dabei soll hier und im Folgenden mit "Anker" der drehbare Läufer beziehungsweise Rotor eines elektrischen Motors oder Generators bezeichnet werden;
- einen zweiten Anker, welcher mit der Abtriebswelle des Fahrzeugantriebs, an welcher die vom Fahrzeugantrieb erzeugte mechanische Leistung abgegeben wird, verbunden ist, und welcher ferner mit dem ersten Anker über Magnetfelder gekoppelt werden kann;
- einen dritten Anker, welcher mit der Abtriebswelle des Fahrzeugantriebs verbunden ist;
- einen Stator, welcher drehfest gelagert ist und mit dem dritten Anker über Magnetfelder gekoppelt werden kann.

Der geschilderte hybride Fahrzeugantrieb besitzt durch seinen Aufbau im Wesentlichen drei die Leistung beeinflussende Elemente, nämlich zum einen die Brennkraftmaschine und zum anderen zwei Elektromotoren beziehungsweise elektrische Generatoren, die durch den ersten Anker und den zweiten Anker beziehungsweise durch den dritten Anker und den Stator gebildet werden. Die Kopplung zwischen der Ausgangswelle der Brennkraftmaschine und der Abtriebswelle des Fahrzeugantriebs erfolgt über den aus dem ersten und zweiten Anker gebildeten ersten Motor/Generator, wobei im Folgenden vereinfachend die Motoren/Generatoren nur als (Elektro-)Motoren bezeichnet werden. Durch die Zwischenschaltung dieses ersten Elektromotors zwischen Brennkraftmaschine und Abtriebswelle ist es möglich, die an der Abtriebswelle nach außen abgegebene mechanische Leistung bzw. Drehzahl unabhängig von der von der Brennkraftmaschine abgegebenen Leistung bzw. Drehzahl einzustellen. Insbesondere kann daher die Brennkraftmaschine in ihrem optimalen Leistungsbereich mit einem möglichst geringen Kraftstoffverbrauch betrieben werden, wobei die bestehende Leistungsdifferenz von dem ersten Elektromotor ergänzt beziehungsweise entnommen wird.

Da der erste Elektromotor (aus erstem und zweitem Anker) einerseits an die Ausgangswelle der Brennkraftmaschine und andererseits an die Abtriebswelle des Fahrzeugantriebs gekoppelt ist, kann er selbst kein Drehmoment an der Abtriebswelle erzeugen, ohne dass eine entsprechende Rückwirkung auf die Ausgangswelle der Brennkraftmaschine ausgeübt würde. Eine von der Brennkraftmaschine unabhängige Drehmoment-Wechselwirkung mit der Abtriebswelle ist jedoch mittels des zweiten Elektromotors, der aus dem dritten Anker und dem Stator gebildet wird, möglich, da der Stator drehfest zum Beispiel an der Karosserie eines Fahrzeuges gelagert ist. Durch eine elektrische Kopplung des ersten Elektromotors (erster und zweiter Anker) mit dem zweiten Elektromotor (dritter Anker und Stator) kann ein vorteilhafter Transfer elektrischer Leistung zwischen den beiden Elektromotoren stattfinden, um Drehzahl und Drehmoment an der Abtriebswelle in gewünschter Weise einzustellen.

Gemäß einer bevorzugten Ausgestaltung des Fahrzeugantriebs sind der zweite Anker und der dritte Anker konzentrisch zueinander angeordnet und miteinander verbunden. Insbesondere können die beiden Anker an der Innenseite beziehungsweise Außenseite eines ringförmigen Bauteils angeordnet sein. Durch die integrale Bauweise von zweitem und drittem Anker kann das elektrische Antriebsteil des hybriden Fahrzeugantriebes besonders kompakt aufgebaut werden. Dabei können erster Anker, zweiter Anker, dritter Anker und Stator sämtlich konzentrisch zueinander um die Ausgangswelle der Brennkraftmaschine bzw. die Abtriebswelle angeordnet sein.

Vorzugsweise weist der erste Anker Wicklungen auf, welche an eine steuerbare Drehstromquelle angeschlossen sind. Über eine derartige Drehstromquelle lässt sich am ersten Anker ein rotierendes Magnetfeld (Drehfeld) erzeugen, welches mit dem zweiten Anker zur Erzeugung einer gewünschten Relativdrehung wechselwirken kann.

Der zweite Anker und/oder der dritte Anker sind vorzugsweise als Permanentmagneten ausgebildet, so dass diese ein festes Magnetfeld mit vorgegebener Polzahl aufweisen, an welches zum Beispiel ein im ersten Anker erzeugtes Drehfeld ankoppeln kann.

Ferner ist der Stator vorzugsweise mit Wicklungen versehen, welche an eine steuerbare Drehstromquelle angeschlossen sind. Über die Drehstromquelle kann somit im Stator ein magnetisches Drehfeld wählbarer Drehrichtung und Drehzahl erzeugt werden, welches zum Beispiel mit einem statischen Magnetfeld des dritten Ankers wechselwirken kann.

Gemäß einer bevorzugten Weiterbildung der Erfindung sind der erste und/oder zweite Anker einerseits sowie der dritte Anker und/oder Stator andererseits über eine Steuerung elektrisch miteinander und/oder mit einem aufladbaren Energiespeicher verbunden. Die Verbindung von erstem/zweitem Anker und drittem Anker/Stator miteinander erlaubt es, elektrische Leistung wie oben bereits erläutert zwischen den beiden Elektromotoren nach Bedarf zu verschieben. So kann zum Beispiel die durch eine Drehzahlverringerung am ersten Anker entnommene elektrische Leistung dem Stator zugeführt werden, um dort eine Drehmomenterhöhung zu bewirken. Ferner kann bei Anfallen überschüssiger elektrischer Leistung diese dem aufladbaren Energiespeicher wie zum Beispiel einer Batterie (Akkumulator) zugeführt werden. Bei hohem Leistungsbedarf kann diese elektrische Energie dem Energiespeicher wieder entnommen und den Elektromotoren zugeführt werden.

Vorzugsweise sind der erste Anker und der zweite Anker so ausgebildet und ansteuerbar, dass diese einen Synchronmotor oder einen Asynchronmotor bilden. Ebenso können der dritte Anker und der Stator so ausgebildet und ansteuerbar sein, dass diese einen Synchronmotor oder einen Asynchronmotor bilden.

Die Erfindung betrifft weiterhin ein Verfahren zum Betrieb eines hybriden Fahrzeugantriebs der oben erläuterten Art, welches die folgenden Schritte enthält:
a) Betrieb der Brennkraftmaschine in einem optimalen Leistungsbereich, in welchem zum Beispiel der Kraftstoffverbrauch und/oder der Schadstoffausstoß minimiert sind;
b) Erzeugung eines Drehzahlunterschiedes gewünschter Größe zwischen dem ersten Anker und dem zweiten Anker durch entsprechende relative Rotation der Magnetfelder zwischen den genannten Ankern, wobei überschüssige mechanische Leistung, die von der Brennkraftmaschine bereitgestellt wurde, als elektrische Leistung entnommen wird, beziehungsweise wobei fehlende Leistung an der mechanischen Leistung, die von der Brennkraftmaschine bereitgestellt wurde, durch elektrische Leistung hinzugefügt wird;
c) Zufuhr der in Schritt b) entnommenen elektrischen Leistung zum dritten Anker und zum Stator und/oder zu einem aufladbaren Energiespeicher beziehungsweise Entnahme der in Schritt b) hinzugefügten elektrischen Leistung vom dritten Anker und Stator und/oder von einem aufladbaren Energiespeicher.

Das geschilderte Verfahren zum Betrieb des hybriden Fahrzeugantriebes beinhaltet insbesondere eine vorteilhafte Leistungsausnutzung, indem die mechanische Leistung der Brennkraftmaschine nach Bedarf durch Umwandlung in elektrische Leistung verringert oder durch Hinzufügung elektrischer Leistung vergrößert wird.

Gemäß einer Weiterbildung des Verfahrens wird sowohl dem ersten und zweiten Anker als auch dem dritten Anker und dem Stator elektrische Leistung aus einem Energiespeicher zugeführt. Dies bedeutet, dass der erste Elektromotor (aus erstem und zweitem Anker) und der zweite Elektromotor (aus drittem Anker und Stator) antreibend wirken. Ein derartiger maximaler elektrischer Antrieb ist zum Beispiel dann wünschenswert, wenn der Fahrzeugantrieb unter Ausschaltung der Brennkraftmaschine allein elektrisch vorgenommen werden soll oder wenn unter Mitwirkung der Brennkraftmaschine eine maximale Leistung entnommen werden soll. Bei ausgeschalteter Brennkraftmaschine sollte diese dabei vorzugsweise blockiert sein, damit der erste Elektromotor ein Drehmoment aufbringen kann.

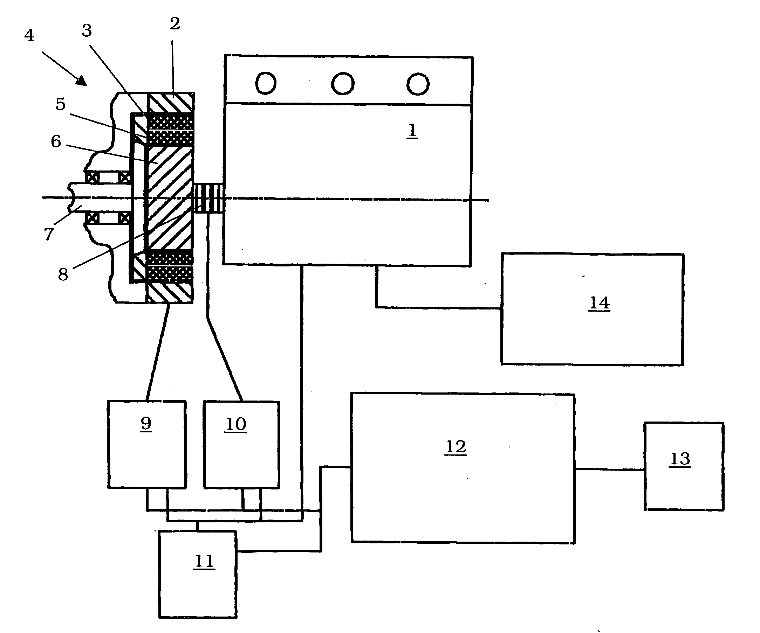

Im Folgenden wird die Erfindung mit Hilfe der Figur beispielhaft erläutert. Die einzige Figur zeigt schematisch die Elemente eines erfindungsgemäßen hybriden Fahrzeugantriebes.

In der Figur ist eine herkömmliche Brennkraftmaschine 1 dargestellt, wobei zwischen der Ausgangswelle 8 dieser Brennkraftmaschine und der Abtriebswelle 7 des Fahrzeugantriebes ein elektrischer Antrieb 4 angeordnet ist. Die Abtriebswelle 7 kann über ein Reduktionsgetriebe und über das Differential mit den Antriebsrädern des Kraftfahrzeugs gekoppelt sein (nicht dargestellt). Die Brennkraftmaschine 1 wird über einen Tank 14 mit Kraftstoff versorgt.

Der elektrische Antrieb 4 besteht aus zwei verschachtelt ausgebildeten Elektromotoren beziehungsweise elektrischen Generatoren. Der erste Elektromotor wird dabei durch einen ersten, inneren Anker ("3P-Anker") 6, welcher drehfest auf der Ausgangswelle 8 der Brennkraftmaschine 1 angeordnet ist, und einen zweiten, ringförmigen äußeren Anker 5 gebildet. Der innere Anker 6 ist ein von der Brennkraftmaschine 1 angetriebener Drehstromsynchronanker mit Wicklungen, welche über drei auf der Ausgangswelle der Brennkraftmaschine angeordnete Schleifringe von einem Vier-Quadranten-Frequenzumrichter (4Q FU) 10 erregt werden.

Der erste, innere Anker 6 läuft in dem konzentrisch hierzu angeordneten zweiten, äußeren Anker 5, welcher als Permanentmagnetanker mit der gleichen Polzahl wie der erste, innere Anker 6 ausgebildet ist. Der zweite, äußere Anker 5 ist dabei drehfest mit der Abtriebswelle 7 verbunden.

Durch Erregen des ersten, inneren Ankers 6 mit Gleichstrom oder mit einem links- beziehungsweise rechtsdrehenden Drehfeld variabler Frequenz ist eine stufenlose relative Drehzahländerung zwischen dem ersten, inneren Anker 6 und dem zweiten, äußeren Anker 5 möglich. Bei Erregen des ersten, inneren Ankers 6 mit Gleichstrom wirkt dieser zusammen mit dem zweiten, äußeren Anker 5 als Magnetkupplung, und es findet keine Drehzahländerung statt. Bei Erregen mit einem rechtsdrehenden Feld (vorlaufend) findet dagegen eine Drehzahlerhöhung bei gleichem Drehmoment statt. In diesem Falle wirken der erste, innere Anker 6 und der zweite, äußere Anker 5 als Elektromotor. Bei linksdrehendem Drehfeld (nacheilend) wird die Drehzahl der Abtriebswelle 7 gegenüber der Drehzahl der Ausgangswelle 8 der Brennkraftmaschine 1 verringert, und die Kombination aus erstem, inneren Anker 6 und zweitem, äußeren Anker 5 wirkt als Generator.

Der elektrische Antrieb 4 enthält weiterhin einen zweiten Elektromotor beziehungsweise Generator, welcher durch einen dritten, äußeren ringförmigen Anker 3 und einen Stator 2 gebildet wird. Der dritte, äußere Anker 3 ist auf der Außenseite des zweiten, äußeren Ankers 5 ausgebildet und ebenfalls ein Permanentmagnetanker. Ebenso wie der zweite, äußere Anker 5 ist er fest mit der Abtriebswelle 7 gekoppelt. Der dritte, äußere Anker 3 dreht sich ferner innerhalb des feststehenden Drehstromstators 2 ("3P-Stator") gleicher Polzahl. Dieser zweite Elektromotor/Generator kann über einen weiteren Vier-Quadranten-Frequenzumrichter 9, der am Stator 2 angeschlossen ist, sowohl als Motor als auch als Generator laufen. Bei Erregen des Stators 2 mit Gleichstrom wirkt dieser relativ zum dritten, äußeren Anker 3 als Haltebremse, so dass zum Beispiel bei Fahrzeugstillstand die Brennkraftmaschine 1 mit dem ersten, innen gelegenen Elektromotor (erster Anker 6 und zweiter Anker 5) gestartet werden kann. Ferner wird mit dem äußeren Elektromotor (dritter Anker 3 und Stator 2) das Fahrzeug im rein elektrischen Betrieb angetrieben und nutzgebremst. Die dabei zurückgewonnene Energie wird in einem Akkusatz 12 gespeichert.

Der zuletzt genannte Akkusatz 12 ist mit den Vier-Quadranten-Frequenzumrichtern 9 und 10 verbunden, um diesen bei Bedarf elektrische Energie zuzuführen oder Energie von diesen entgegen zu nehmen. Ferner ist der Akkusatz 12 mit einem Ladegerät 13 verbunden, über welches bei Bedarf externe elektrische Energie zugeführt werden kann.

Wie weiterhin aus der Figur erkennbar ist, sind die Frequenzumrichter 9 und 10, die Brennkraftmaschine 1 und der Akkusatz 12 an eine Fahr- und Bremssteuerung 11 angeschlossen, welche den gesamten Betrieb des Fahrzeugantriebs überwacht und in geeigneter Weise steuert.

Bei einem rein verbrennungsmotorischen Antrieb des Fahrzeuges wird die Drehzahlanpassung bis zur Synchrondrehzahl von erstem Anker 6 und zweitem Anker 5 durch ein linksdrehendes Magnetfeld, das dem ersten Anker 6 über den Frequenzumrichter 10 aufgeprägt wird, erreicht. In diesem Betrieb läuft die erste elektrische Maschine aus erstem und zweitem Anker 6, 5 als Generator. Das Abtriebsmoment des zweiten Ankers 5 ist dabei gleich dem Moment der Brennkraftmaschine 1. Die gewonnene elektrische Energie wird dem Antriebssystem 4 über die zweite elektrische Maschine (aus drittem Anker 3 und Stator 2) wieder zugeführt und sorgt für die notwendige Drehmomenterhöhung.

Bei Drehzahlen, die über der Drehzahl der Brennkraftmaschine 1 liegen, wirkt die erste elektrische Maschine aus erstem und zweitem Anker 6, 5 als Motor. Die für ihren Betrieb notwendige elektrische Energie wird dabei aus der zweiten elektrischen Maschine (aus drittem Anker 3 und Stator 2) entnommen. Diese zweite elektrische Maschine sorgt nunmehr für die Drehmomentreduktion, um das Produkt aus Drehzahl und Drehmoment konstant beziehungsweise gleich der von der Brennkraftmaschine 1 abgegebenen Leistung zu halten.

Die dargestellten Betriebsarten ermöglichen es, die Brennkraftmaschine 1 hinsichtlich Drehzahl und Leistung im Bestpunkt zu betreiben. Dabei wird nur die für den Fahrbetrieb notwendige Energie der Abtriebswelle 7 zugeführt, eventuelle überschüssige Energie wird in dem Akkusatz 12 gespeichert. Wird mehr Energie benötigt, als die Brennkraftmaschine 1 bereitstellen kann, so wird diese dem Akkusatz 12 entnommen. Eine weitere Nutzungs- oder Betriebsmöglichkeit des Fahrzeugantriebs besteht darin, bei mechanisch blockierter Brennkraftmaschine 1 die erste elektrische Maschine (aus erstem und zweitem Anker 6, 5) zusätzlich als Elektromotor zu verwenden, so dass auch im reinen elektrischen Betrieb die volle Antriebsleistung zur Verfügung steht. Tatsächlich steht sogar noch wesentlich mehr Leistung zur Verfügung, da elektrische Maschinen im Gegensatz zu Verbrennungsmotoren kurzzeitig hoch überlastbar sind.

Während in der vorangegangenen Beschreibung die elektrischen Maschinen als Synchronmaschinen dargestellt wurden, lässt sich die erfindungsgemäße Antriebskombination auch mit Asychronmaschinen realisieren. Letztere haben den Vorteil eines wirklich verlustfreien Leerlaufes zwischen zwei Maschinenteilen, da kein permanentes Magnetfeld vorhanden ist.

Der dargestellte Fahrzeugantrieb hat den Vorteil, dass für ihn eine Kupplung, ein Schaltgetriebe oder ein automatisches Getriebe nicht notwendig sind. Die Brennkraftmaschine 1 benötigt bis auf die zwingend notwendigen Nebenaggregate wie Einspritzpumpe, Wasserpumpe, Ölpumpe keine weiteren Nebenaggregate. Servoantriebe (zum Beispiel Lenkung oder Bremsen) müssen prinzipiell elektrisch angetrieben werden, da auch ein rein elektrisches Fahren möglich sein soll. Der Anlasser und die Lichtmaschine werden durch die elektrische Doppelmaschine 4 ersetzt.

Durch den Betrieb der Brennkraftmaschine 1 im optimalen Leistungsbereich lässt sich eine erhebliche Kraftstoffersparnis erzielen. Unter der Voraussetzung, dass ein normaler Pkw ca. 10 kWh Energie pro 100 km Fahrstrecke braucht, kann davon ausgegangen werden, dass bei rein verbrennungsmotorischem Antrieb beim Betrieb der Brennkraftmaschine 1 im Bestpunkt (TDI-Motor mit ca. 190 g Brennstoff/kWh, Leistung 20 kW, Aussetzbetrieb) und einem angenommenen Gesamtwirkungsgrad der elektrischen Kraftübertragung von 80% der Kraftstoffbedarf bei 2,86 1 (Diesel) pro 100 km liegt.

## Patentansprüche

1. Hybrider Fahrzeugantrieb, enthaltend
- eine Brennkraftmaschine (1) mit einer Ausgangswelle (8);
- einen ersten Anker (6), welcher auf der Ausgangswelle der Brennkraftmaschine angeordnet ist;
- einen zweiten Anker (5), welcher mit der Abtriebswelle (7) des Fahrzeugantriebs verbunden ist und mit dem ersten Anker (6) über Magnetfelder gekoppelt werden kann;
- einen dritten Anker (3), welcher mit der Abtriebswelle (7) verbunden ist;
- einen Stator (2), welcher drehfest gelagert ist und mit dem dritten Anker (3) über Magnetfelder gekoppelt werden kann.

2. Fahrzeugantrieb nach Anspruch 1,
**dadurch gekennzeichnet, dass** der zweite Anker (5) und der dritte Anker (3) konzentrisch angeordnet und miteinander verbunden sind.

3. Fahrzeugantrieb nach Anspruch 1 oder 2,
**dadurch gekennzeichnet, dass** der erste Anker (6) Wicklungen aufweist, welche an eine steuerbare Drehstromquelle (10) angeschlossen sind.

4. Fahrzeugantrieb nach einem der Ansprüche 1 bis 3,
**dadurch gekennzeichnet, dass** der zweite Anker (5) und/oder der dritte Anker (3) als Permanentmagneten ausgebildet sind.

5. Fahrzeugantrieb nach einem der Ansprüche 1 bis 4,
**dadurch gekennzeichnet, dass** der Stator (2) Wicklungen aufweist, welche an eine steuerbare Drehstromquelle (9) angeschlossen sind.

6. Fahrzeugantrieb nach einem der Ansprüche 1 bis 5,
**dadurch gekennzeichnet, dass** der erste und/oder zweite Anker (6, 5) sowie der dritte Anker (3) und/oder Stator (2) über eine Steuerung (9, 10, 11) elektrisch miteinander und/oder mit einem aufladbaren Energiespeicher (12) verbunden sind.

7. Fahrzeugantrieb nach einem der Ansprüche 1 bis 6,
**dadurch gekennzeichnet, dass** der erste Anker (6) und der zweite Anker (5) einen Synchronmotor oder einen Asynchronmotor bilden.

8. Fahrzeugantrieb nach einem der Ansprüche 1 bis 7,
**dadurch gekennzeichnet, dass** der dritte Anker (3) und der Stator (2) einen Synchronmotor oder einen Asynchronmotor bilden.

9. Verfahren zum Betreiben eines hybriden Fahrzeugantriebs nach mindestens einem der Ansprüche 1 bis 8, enthaltend die folgenden Schritte:
a) Betrieb der Brennkraftmaschine (1) in einem optimalen Leistungsbereich;
b) Erzeugung eines Drehzahlunterschiedes gewünschter Größe zwischen dem ersten Anker (6) und dem zweiten Anker (5) durch entsprechende relative Rotation der koppelnden Magnetfelder zwischen den Ankern, wobei überschüssige mechanische Leistung der Brennkraftmaschine (1) als elektrische Leistung entnommen oder fehlende mechanische Leistung der Brennkraftmaschine (1) durch elektrische Leistung ergänzt wird;
c) Zufuhr der in Schritt b) entnommenen elektrischen Leistung zum dritten Anker (3) und zum Stator (2) und/oder zu einem aufladbaren Energiespeicher (12) beziehungsweise Entnahme der in Schritt b) hinzugefügten elektrischen Leistung vom dritten Anker (3) und Stator (2) und/oder von einem aufladbaren Energiespeicher (12).

10. Verfahren nach Anspruch 9,
**dadurch gekennzeichnet, dass** sowohl dem ersten und zweiten Anker (6, 5) als auch dem dritten Anker (3) und Stator (2) elektrische Leistung aus einem Energiespeicher (12) zugeführt werden, wobei die Brennkraftmaschine (1) vorzugsweise mechanisch blockiert ist.
